# EUROPEAN PATENT SPECIFICATION

(11) **EP 0 265 240 B1**
(45) Date of publication and mention of the grant of the patent: **18.08.1993**
(21) Application number: 87309300.9
(22) Date of filing: 21.10.1987
(51) Int. Cl.: C09K 19/38, C08G 63/60, C08G 63/18, C08G 69/44

(54) **Liquid-crystalline polymer**
Flüssig-Kristallpolymer
Polymère liquide cristallin

(30) Priority: 22.10.1986 JP 251424/86
(43) Date of publication of application: 27.04.1988
(73) Proprietor: POLYPLASTICS CO. LTD., Higashi-ku Osaka-shi (JP)
(72) Inventor: Hijikata, Kenji, Mishima-shi Shizuoka (JP)
(74) Representative: Taylor, Phillip Kenneth

(56) References cited:
- EP-A- 0 226 839
- US-A- 4 337 191
- US-A- 4 746 694

## Description

The present invention relates to a liquid-crystalline polymer which has a high strength (with small anisotropic variation) and which exhibits anisotropism in its molten state.

Liquid-crystalline polymers which exhibit anisotropism in their molten state have recently attracted attention because of their high strength, high heat resistance, and superior moldability. A variety of liquid-crystalline polymers have been proposed so far; and typical ones are disclosed in Japanese Patent Laid-open Nos. 72393/1974, 43223/1975, and 50594/1979. All of them have a skeleton composed or rigid monomers so that they exhibit the liquid-crystalline properties and provide high strength and good processability.

Liquid-crystalline polymers, however, have a disadvantage in that they are extremely liable to orientation because they have rigid skeletons. This liability to orientation leads to anisotropy of orientation and strength in the molded articles which as a result are subject to fibrillation. Attempts made so far to reduce the anisotropism in molded articles include the introduction of soft spacers into the rigid skeleton and the introduction of reinforcements into the polymer. The former sacrifices the high strength attributable to the rigidity, and the latter, the characteristic properties of the resin such as light weight, chemical resistance, and moldability. Reducing the anisotropy of strength without impairing the superior mechanical strength of the rigid polymer is very important to increase the dimensional accuracy of precision parts and to produce films having a high mechanical strength.

It has now been unexpectedly found that a polymer having a naphthalene skeleton in the main chain (as typified by Japanese Patent Laid-open No. 50594/1979) has a high strength and superior melt-processability even though it is composed of p-position benzene rings and naphthalene rings and does not have a so-called soft spacer incorporated therein.

The present invention relates to a liquid-crystalline polymer exhibiting anisotropism in its molten state, characterised in that the main chains thereof are comprised of 2 to 50 mole percent of naphthalene groups of at least two kinds the bonding positions of which groups are selected from the 1,2-, 1,4-, 1,5-, 1,8-, 2,3- and 2,6-, positions and that naphthalene groups bonded through at least two of these positions are present in the main chains and in that the amount of the naphthalene groups bonded through the 2,6- position amount to 50-95 mol% of the total amount of the naphthalene groups.

The constituents of the polymers other than the naphthalene groups being selected from a p-position phenyl group, a 4,4'-biphenyl group, and/or a compound and substituted derivatives thereof represented by Formula (A) below 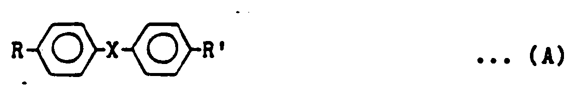
(wherein, X is a group selected from alkylene (C₁-C₄), alkylidene (C₁-C₄) -0-, -S- -SO-, -SO₂, and -CO-; and R and R' are reactive groups, such as hydroxyl group and carboxyl group and esters thereof.

The liquid-crystalline polymer of the present invention is a melt-processable polymer having such characteristic properties that the polymer molecule chains are regularly oriented parallel to one another in the molten state. The state in which molecules are oriented in this manner is referred to as the liquid-crystal state or the nematic phase of liquid crystal substance. A polymer like this is composed of monomers which are long and narrow, flat and rigid along the long axis of the molecule and have a plurality of chain extension bonds coaxial or parallel to one another.

Using various kinds of naphthalene compounds to reduce anisotropism is not obvious. Heretofore, they have usually been used as a mesogen to provide rigidity. Some typical examples are disclosed in Japanese Patent Laid-open Nos. 72393/1974, 188423/1985 and 106622/1986.

It is surprising that the introduction of a naphthalene compound containing various isomers for reduction of anisotropism does not substantially reduce the mechanical strength.

The naphthalene compounds that can advantageously be used in the production of the polymers of the present invention are those which have functional groups at two or more substituting positions selected from 1,2-position, 1,4-position, 1,5-position, 1,8-position, 2,3-position, 2,6-position and 2,7-position. The functional group may be any functional group capable of forming a polyester. In other words, they are selected from hydroxyl group, carboxyl group, and ester group.

The preferred naphthalene compounds are hydroxynaphthoic acid, dihydroxynaphthalene, and/or naphthalenedicarboxylic acid.

Those which realize the linearity of the main chains are 2,6-substituted compounds. They should preferably account for more than 50% of the total amount of the naphthalene groups including the substituent groups.

The bonding units in the polymer should preferably be an ester and derived from functional groups selected from a hydroxyl group, carboxyl group, and ester group.

Preferred examples of compounds containing such functional groups and which may be used to form the other constituents of the polymer are terephthalic acid, hydroquinone, p-diacetoxyphenylene, and p-hydroxybenzoic acid and esters thereof, 4,4'-dihydroxybiphenyl, 4,4'-dicarboxybiphenyl, and 4-hydroxy-4'carboxybiphenyl and esters thereof. Other preferred examples include dihydroxy compounds, dicarboxy compounds, hydroxycarboxy compounds, and esters thereof represented by Formula (A) in which X is methylene, propenyl, or -SO₂-. Further preferred examples include hydroxybenzoic acid, 4,4'-dihydroxybiphenyl, 4,4'-dicarboxybiphenyl, and esters thereof.

These mesogens other than naphthalene groups should preferably account for more than 50 mol% of the total amount including the naphthalene groups.

The polyester of the present invention may have a soft spacer incorporated other than a mesogen, according to need. A detailed description of soft spacers will be found in "Advances in Polymer Science", by Lentz et al., Vol. 59, p. 104 (1984). Typical examples of soft spacers include polymethylene, polyethylene oxide, and polysiloxane, and copolymers thereof such as polyalkylene terephthalate and polyalkylene oxyterephthalate.

Additional compounds which work like a soft spacer include those which change the angle of the molecule chain and those which introduce a substituent group into the mesogen to hinder the linearity three-dimensionally. Examples of the former include isophthalic acid and examples of the latter include methylhydroquinone, phenyl, methylene, phenylene substituted with a halogen at p-position, and 4,4'-biphenyl. They are effective copolymerizable compounds.

The polyester of the invention which exhibits the anisotropism in its molten state can be produced by various ester-forming processes.

The monomer compound can be reacted by melt acidolysis in the absence of any heat exchange fluid. In this process, the monomer is heated to form a melt. As the reaction proceeds, solid polymer particles begin to suspend in the melt. In the final stage of the condensation reaction, the reaction system may be evacuated to facilitate the removal of volatile by-products (eg., acetic acid or water).

A slurry polymerization process may also be employed in the preparation of the liquid-crystalline polyester of the invention. In this process, the solid product is obtained in the form of suspension in a heat exchange medium.

No matter which process may be used for polymerization, the organic monomeric reactants to form the liquid-crystalline polyester may be used in a modified form obtained by esterifying the hydroxyl group of the monomer at ambient temperature (i.e., in the form of their lower acyl esters). The lower acyl groups have preferably about 2 to 4 carbon atoms. Preferably, acetates of the organic monomeric reactants are employed in the reaction. Another modified form (eg., phenol ester) obtained by esterifying the carboxylic acid group may also be used.

Typical examples of the catalysts usable in both of the melt acidolysis and slurry processes include dialkyltin oxides (such as dibutyltin oxide), diaryltin oxide, titanium dioxide, antimony trioxide, alkoxytitanium silicates, titanium alkoxides, alkali metal and alkaline earth metal salts of carboxylic acids (such as zinc acetate), Lewis acids (such as BF₃), and gaseous acid catalysts such as hydrogen halides (eg., HC1). The catalyst is used in an amount of about 0.001-1 wt%, particularly about 0.01-0.2 wt%, based on the total weight of the monomer.

The aromatic polymers obtained in the invention are substantially insoluble in ordinary solvents and, therefore, are not suitable for solution processing. However, they can be worked easily by ordinary melt processing. Particularly preferred aromatic polymers are soluble in pentafluorophenol to some extent.

The aromatic polyester obtained in the invention usually have a weight-average molecular weight of about 1,000-200,000, preferably about 2,000-50,000, particularly about 3,000-25,000.

The molecular weight may be determined by gel permeation chromatography or other standard methods in which no polymer solution is formed, such as a method in which terminal groups of a compression molded film are determined by infrared spectroscopy. Alternatively, the molecular weight may be determined according to the light-scattering method after dissolution in pentafluorophenol.

A 0.1 wt% solution of the aromatic polyester or polyesteramide dissolved in pentafluorophenol at 60°C usually has an inherent viscosity (I.V.) of at least about 2.0 dl/g, for example, about 2.0-10.0 dl/g.

The liquid-crystalline polymer of the invention may be incorporated with various kinds of additives and/or fillers by the well-known method to improve the mechanical properties.

The additives are those substances which are commonly added to thermoplastic resins and thermosetting resins. They are a plasticizer, anti-oxidant, UV light stabilizer, anti-static agent, flame retardant, dye and pigment, blowing agent, divinyl compound, cross-linking agent (eg., peroxide and vulcanizing agent), and lubricant (to improve flowability and releasability).

The fillers include inorganic fibers such as glass fiber, carbon fiber, metallic fiber, ceramic fiber, boron fiber, and asbestos; powdery substances such as calcium carbonate, highly dispersible silicate, alumina, aluminium hydroxide, talc, mica, glass flake, glass bead, quartz powder, silica sand, metal powder, carbon black, barium sulfate, and calcined gypsum; inorganic compounds such as silicon carbide, alumina, boron nitride, and silicon nitride; and whisker and metal whisker.

### (Effect of the Invention)

The liquid-crystalline polymer of the invention which exhibits in its molten state has the decreased anisotropism of mechanical strength while retaining its iherent rigidity nearly intact. This was achieved without remarkably sacrificing the high strength ascribing to the rigidity. This resin composition provides an oustanding dimensional accuracy for precision parts and also provides film of high mechanical strength because it has the decreased anisotropism of molecular orientation. By virtue of these characteristic properties, it will find use in many fields.

The invention will be further illustrated by but not limited to, the following examples.

### Example 1

In a reactor equipped with a stirrer, nitrogen inlet, and distillating pipe were charged 1260 parts by weight of 4-acetoxybenzoic acid, 460 parts by weight of 2-acetoxy-6-naphthoic acid, and 230 parts by weight of 2-acetoxy-3-naphthoic acid. The reactants were heated at 260°C under a nitrogen stream. The reaction was performed at 260°C for 2.5 hours and at 280°C for 3 hours with vigorous stirring. During the reaction, acetic acid was distilled away. The reaction temperature was further raised to 320°C and the introduction of nitrogen was suspended. The reactor was gradually evacuated at 0.1 mmHg over 15 minutes. While keeping this temperature and pressure, stirring was continued for 1 hour.

The resulting polymer was found to have an intrinsic viscosity of 5.1 (in 0.1 wt% solution in pentafluorophenol at 60°C). According to the FT-IR spectrometry (KBr method), the formation of polyester was confirmed by the fact that the C=0 peak attributable to the aromatic polyester bond appeared at 1750 cm ⁻¹ and the peak attributable to the monomer disappeared.

In addition, the resulting polymer exhibited the pattern of nematic liquid crystal when melted on a hot stage under a polarization microscope. Thus it was confirmed that the resulting polymer exhibits the anisotropism in its molten state.

The thus obtained polymer was crushed, while cooled with liquid nitrogen, into fibrous powder. The powder was injection-moulded into a square plate measuring 120 x 120 x 2 mm (with a side gate at the centre of one side). The coefficient of linear expansion at 100-150°C and the flexural strength in the direction parallel to the perpendicular to the flow were measured. The results are shown in Table 1.

### Examples 2 to 6 and Comparative Examples 1 to 3

Polymers were prepared in the same manner as in Example 1 except that the molar ratio was changed as shown in Table 1. IR spectrometry was performed and intrinsic viscosity was measured. The anisotropism in the molten state was confirmed. The coefficient of linear expansion and the flexural strength were measured for the test pieces prepared as metioned above. The results are shown in Table 1.

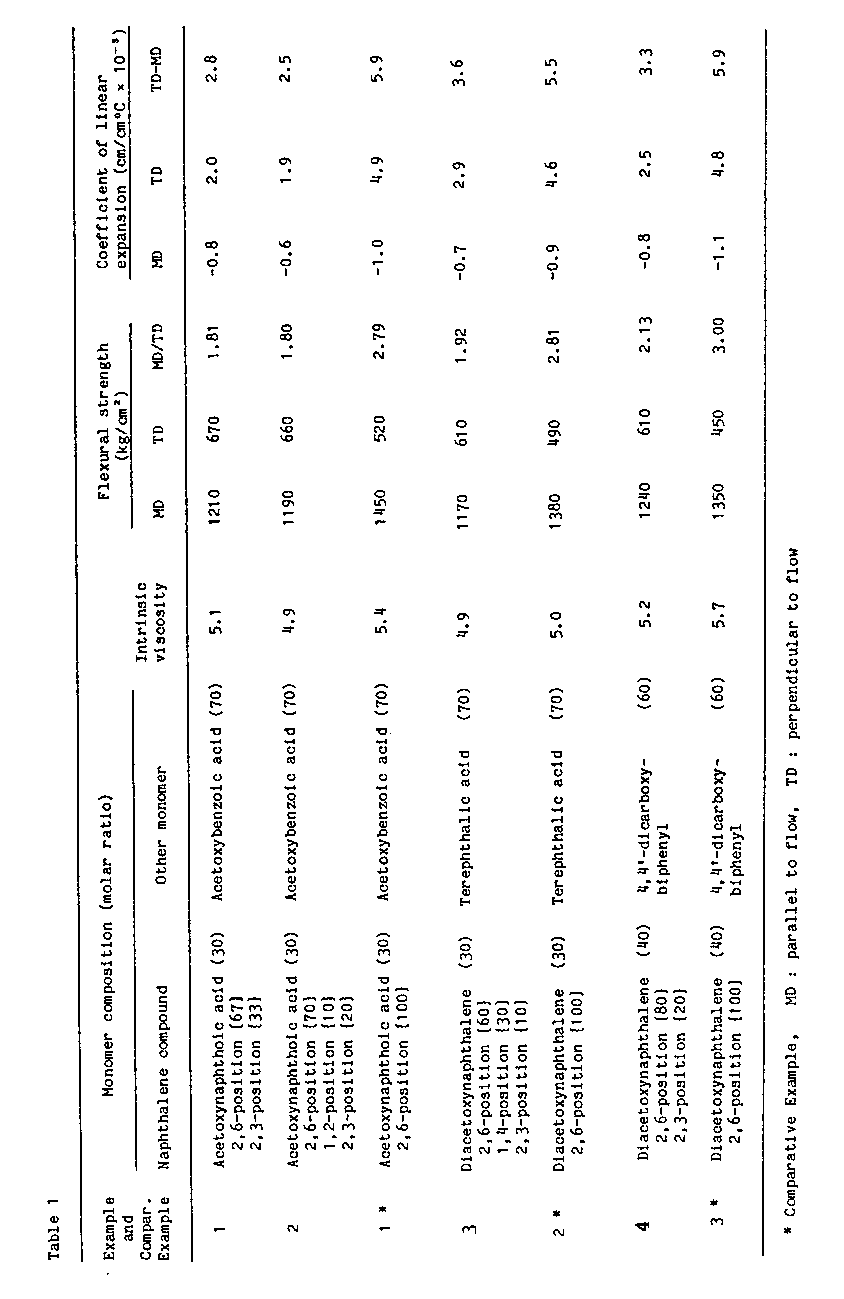

## Claims

1. A liquid-crystalline copolymer which exhibits anisotropism in the molten state characterised in that the main chains thereof are comprised of from 2 to 50 mole percent of naphthalene groups of at least two kinds the bonding positions of which groups are selected from the 1,2-, 1,4-, 1,5-, 1,8-, 2,3- and 2,6- positions and that naphthalene groups bonded through at least two of these positions are present in the main chains and in that the amount of the naphthalene groups bonded through other positions than the 2,6- position amount to less than 50-95 mol% of the total amount of the naphthalene groups the constituents of the copolymer other than the naphthalene groups being selected from a p-position phenyl group, a 4,4'- biphenyl group, and/or a compound and substituted derivatives thereof represented by the Formula; 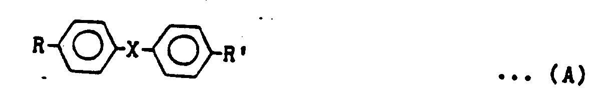 wherein, X is a group selected from alkylene (C₁-C₄), alkylidene (C₁-C₄), -0-, -S-, -SO-, -SO₂-, and -CO-; and R and R' are reactive groups.

2. A liquid-crystalline polymer as claimed in claim 1, characterised in that the naphthalene groups are formed from monomers having one kind or two kinds of functional groups selected from the hydroxyl group, carboxyl group, and ester group.

3. A liquid-crystalline polymer as claimed in claim 1 or 2, characterized in that the liquid-crystalline polymer is a polyester.

4. A liquid-crystalline polymer as claimed in any of the preceding claims, characterised in that the phenyl groups are derived from monomers having at the p-position a functional group selected from the hydroxyl group, carboxyl group, and ester group.

5. A liquid-crystalline polymer as claimed in claim 4, characterized in that the 4,4'-biphenyl group is derived from a monomer having two functional groups selected from the hydroxyl group, carboxyl group, and ester group.

## Patentansprüche

1. Ein flüssigkristallines Copolymer, welches im geschmolzenen Zustand Anisotropie zeigt, dadurch
**gekennzeichnet,** daß seine Hauptketten 2 bis 50 Mol-% Naphthalingruppen von mindestens zwei Arten enthalten, wobei die Bindungsstellungen der genannten Gruppen aus der 1,2-, 1,4-, 1,5-, 2,3- und 2,6-Stellung ausgewählt sind, und daß Naphthalingruppen, die über mindestens zwei dieser Stellungen gebunden sind, in den Hauptketten vorhanden sind, und daß der Anteil der Naphthalingruppen, die über andere Stellungen als die 2,6-Stellung gebunden sind, weniger als 50-95 Mol-% des Gesamtanteils der Naphthalingruppen ausmacht, wobei die Bestandteile des Copolymers, die keine Naphthalingruppen sind, aus einer Phenylgruppe mit den Bindungsstellungen in p-Stellung, einer 4,4'-Biphenylgruppe ond/oder einer Verbindung und substituierten Derivaten hiervon ausgewählt sind, welche durch die Formel (A) 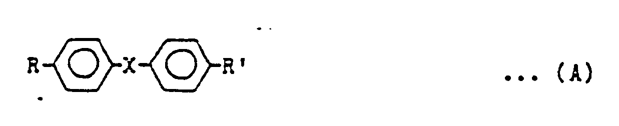 dargestellt wird, in der X eine aus den Resten C₁-C₄-Alkylen, C₁-C₄-Alkyliden -O-, -S-, -SO-, -SO₂- und -CO- ausgewählte Gruppe und R und R' reaktive Gruppen sind.

2. Ein flüssigkristallines Polymer wie im Anspruch 1 beansprucht, dadurch
**gekennzeichnet,** daß die Naphthalingruppen aus Monomeren gebildet sind, welche eine oder zwei Arten von funktionellen Gruppen aufweisen, die aus der Hydroxylgruppe, der Carboxylgruppe und der Estergruppe ausgewählt sind.

3. Ein flüssigkristallines Polymer wie im Anspruch 1 oder 2 beansprucht, dadurch
**gekennzeichnet,** daß das flüssigkristalline Polymer ein Polyester ist.

4. Ein flüssigkristallines Polymer wie in irgendeinem der vorangegangenen Ansprüche beansprucht, dadurch
**gekennzeichnet,** daß die Phenylgruppen von Monomeren abgeleitet sind, welche in der p-Stellung eine funktionelle Gruppe aufweisen, die aus der Hydroxylgruppe, der Carboxylgruppe und der Estergruppe ausgewählt ist.

5. Ein flüssigkristallines Polymer wie in Anspruch 4 beansprucht, dadurch
**gekennzeichnet,** daß die 4.4'-Biphenylgruppe von einem Monomeren abgeleitet ist, welches zwei funktionelle Gruppen aufweist, die aus der Hydroxylgruppe, der Carboxylgruppe und der Estergruppe ausgewählt sind.

## Revendications

1. Copolymère à cristal liquide qui fait montre d'anisotropie à l'état fondu, caractérisé par le fait que ses chaînes principales sont constituées de 2 à 50 moles pour cent de groupes naphtalène d'au moins deux types dont les positions de liaison sont choisies parmi les positions 1,2, 1,4, 1,5, 1,8, 2,3 et 2,6 et que les groupes naphtalène liés par au moins deux de ces positions sont présents dans les chaînes principales et par le fait que la quantité des groupes naphtalène liés par d'autres positions que les positions 2,6 compte pour moins de 50 à 95 mol % de la quantité totale des groupes naphtalène, les constituants du copolymère autres que les groupes naphtalène étant choisis parmi un groupe *p*-phényle, un groupe 4,4'-biphényle et/ou un composé et ses dérivés de substitution représentés par la formule : 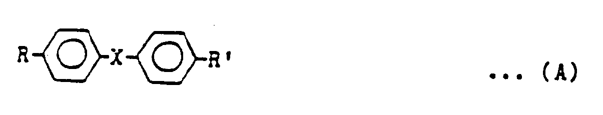 dans laquelle X est un groupe choisi parmi les groupes alkylène (C₁-C₄), alkylidène (C₁-C₄), -O-, -S-, -SO-, -SO₂-et -CO- ; et R et R' sont des groupes réactifs.

2. Polymère à cristal liquide tel que revendiqué dans la revendication 1, caractérisé par le fait que les groupes naphtalène sont formés à partir de monomères ayant une espèce ou deux espèces de groupes fonctionnels choisis parmi le groupe hydroxyle, le groupe carboxyle et un groupe ester.

3. Polymère à cristal liquide tel que revendiqué dans la revendication 1 ou 2, caractérisé par le fait que le polymère à cristal liquide est un polyester.

4. Polymère à cristal liquide tel que revendiqué dans l'une quelconque des revendications précédentes, caractérisé par le fait que les groupes phényle sont dérivés de monomères ayant, en position *p*, un groupe fonctionnel choisi parmi le groupe hydroxyle, le groupe carboxyle et un groupe ester.

5. Polymère à cristal liquide tel que revendiqué dans la revendication 4, caractérisé par le fait que le groupe 4,4'-biphényle est dérivé d'un monomère ayant deux groupes fonctionnels choisis parmi le groupe hydroxyle, le groupe carboxyle et un groupe ester.
